# EUROPEAN PATENT APPLICATION

(11) **EP 2 933 587 A1**
(43) Date of publication of application: **21.10.2015**
(21) Application number: 14002732.7
(22) Date of filing: 05.08.2014
(51) Int. Cl.: F25B 29/00, F25D 31/00

(54) **Machine for the simultaneous working of cold and hot temperature areas**

(30) Priority: 06.08.2013 IT FI20130191
(71) Applicant: Russotto, Massimiliano, 20128 Milano (MI) (IT)
(72) Inventor: Russotto, Massimiliano, 20128 Milano (MI) (IT)

(57) **Abstract**

The machine for the simultaneous running of cold and hot temperature areas allows to prepare and preserve cool and hot products at the same time, while cooling and warming functions are usually performed by different tools. The machine uses thermic energy developed by heath exchange coils needed to cool some areas, which would usually be wasted in the environment, to warm other areas. Horizontal separation planes can be used to create the different areas, and the planes are filled with increasing quantities of coil depending on the height. The insertion of spheres positioned in the ground face of the machine allows movements. The considered technology is particularly suitable to manage food products distribution activities also during the closing hours of retail shops, but can be used also for other purposes, among which domestic uses or pharmacologic activities.

## Description

The machine for the running of cold and hot temperature areas allows to prepare and preserve cold and hot products at the same time. This technological tool is new as it can be used to warm and cool products at the same time, while such functions are usually performed by different tools, and this is done by using a technology which can allow considerable energetic advantages. Therefore, this machine is created as a "refrigerator - oven" hybrid. In general, technologies for the simultaneous production of cold and warm are not widespread. Among the reasons, the fact that industrial processes usually need the first one or the second one, (eg. food industries cooling technologies, heavy industries warming technologies), or at least well different tools are used to pass from cool to warm or vice versa. What makes the use of a unique tool to regulate different temperatures interesting is the arising evolution of conservation and distribution needs of products, specially, but not exclusively, the requirements of foods and beverages industries. Effectively, few years ago there was a rigid differentiation between distribution and consumption environments, therefore, for example, cold products were consumed cooled (fresh products, ice creams), dried products at ambient temperature, warm products immediately after cooking (in dining rooms, in restaurants, in pubs). It is only in the last few years that this rigid differentiation has become less rigid, thanks to the spreading of frozen foods (cold products for warm consumption), the shift of consumer attitudes (the attitude to buy the bread "still warm", the increase of outdoor eating), the evolutions of pharmaceutical and biotechnology industries, the spreading of some technologies following these developments (microwave oven is perhaps the most important). Nevertheless tools for the simultaneous warming and cooling preservation are not widespread. The technologic background of what proposed can be found looking at some modern geothermic warming equipments, which use the warming power of subterranean sources and distribute it in the houses by using tubes mainly passing under flats floors. The experienced principle is that, in order to obtain a mild level of warming, red-hot coils are not needed, provided that conductors are suitably positioned to naturally favour warm rise. The look of foods and beverages dispensers located in some offices or transport stations may be considered similar. Such dispensers perform either a cooling function (foods) or a warming function (hot beverages). They have considerable features of robustness and resistance, as they are normally positioned in environments which are not fully controlled, and, as a result, their manageability is reduced, and the related production and management costs are high. In addition, the related energetic consumption is not slight: getting cold temperatures is expensive (specially during summer) and exchange heath is spread in the surrounding environment. A energetic engineer may probably argue that the summer energetic consumption includes the cooling energy, which increases with external increasing temperatures, and the supplementary energy needed to cool the surrounding environment "warmed" by the dispenser.

On the contrary, the proposed machine uses a technology which can be considered extremely efficient from an energetic point of view, and an effective implementation could even allow to reduce consumptions in comparison with a unique temperature dispenser.

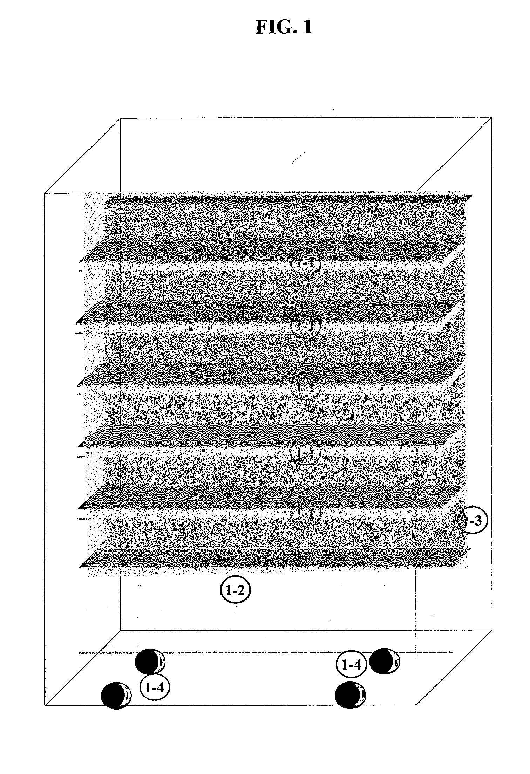

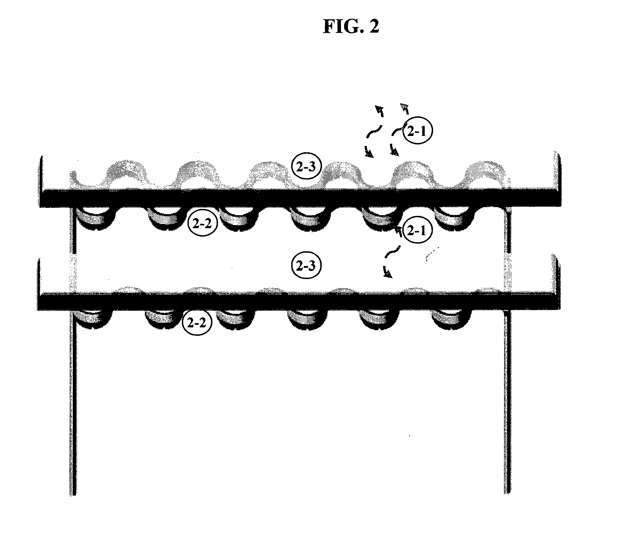

The machine with hot and cold temperature areas may be presented with a parallelepiped shape (fig. 1). Horizontal planes are situated internally (1-1) separating the space in sections positioned at different height levels. The machine might therefore have, for example, 5-8 sections (or "drawers"), separated by the planes. Each separation horizontal plane is an isolated compartment in relation to the space where the products are positioned, and the coils described later on pass inside the planes. Again, each section can or cannot divided in compartments for the positioning of a single product category. The engine for cool production is positioned under the lowest section (1-2). The cool generated is used to cool the lowest sections. Heath exchanger coils begin from the cooling point and, rising through the rear surface of the machine (1-3) (an isolated compartment, connected with the compartments which are the separation planes), are inserted inside the horizontal separation planes. Figure n. 2 shows a possible exchange coils positioning. They may appear external for graphic clarity, but they are positioned inside the planes. Therefore such coils, instead of loosing heath in the surrounding environment to obtain the cooling of the internal compartment, provide such heath on behalf of the upper levels. As they are positioned under the upper sections, they warm the temperature of the related overlooking section (2-1). As the heath generated is proportional to the coil surface, a growing quantity of coil, depending on the height level, will be positioned inside the planes: for example, it will be possible to have 2 lower sections cooled, under the third section positioning of coil for a stated surface (example 0,014 sm), under the forth section twice as much, and so on (2-2). The highest section will be very warmed as a result of the large quantity of coil inside its separation plane. It is possible to create the horizontal separation planes with identical heights (thickness), increasing further the generated heath differentials: empty lower planes isolate the cold levels from the hot levels, middle separation planes with few coil weaken the heath for a further dispersive effect inside the separation plane, the highest plane "full" of coil is even warmer as empty space is nearly inexistent inside the plane. Temperature differentials can be further increased, and energetic consumption improved, by using materials with different temperature conduction capacities. An ideal situation is when the product supporting plane (upper surface of separation plane)(2-3) is made of high heath conduction capacity material, as well as the material of coils, while the lower surfaces of separation planes and the rear pane (1-3) is made of low heath conduction materials. The lowest levels, i.e. the cold ones, may be entirely high conduction. Each level can be divided in compartments, with adjustable dimensions, to position just one kind of product. Allowing machine movements is also useful. However, further essential changes are needed to get this purpose, as the ordinary present standards are often more than 200 kg of weight for empty dispensers, with no tools for moving the dispensers autonomously by the user. This can be done by reducing the volumetric dimensions and by using innovative materials allowing weight reductions. An example could be height 155 cm, width 90 cm, depth 60 cm, with a weight that, empty, should be no more than 100 kg. And inserting spheres made of steel or other high resistance material positioned in the ground face of the machine (1-4). Such spheres can be blocked or unblocked, and when they are unblocked they allow ground slipping through push.

Instead of loosing the cooling heath, this is used to create sections which range from ambient temperature to a real "oven". One of the most important employments for which this tool was projected is represented by the activities of those people/organizations who, for various reasons, need to distribute hot and cold food products also during the closing hours of their shops. It will be possible to position products considering the specific needs, for example milk in the lowest section, bread and brioches to warm smoothly in the middle upper sections, and, in the highest section, the products which must be warmed strongly (pizzas, hamburgers). For what has been said, these machines are relatively manageable and can be moved easily. In this sector, the machine will be completed with other modules for activities of products selection, payment, extraction, electronically managed. Such functions can be integrated in the same container, or managed by an external interface. In the latter case selections are made using a module, sometimes referred to as "master" from the sector experts, with various possibilities of selection, payment, etc. Other possible employments are domestic. In this case, the dimensions must be reduced, but the working principle is the same.

A patent is required and, If this request could not be accepted as it is, the possibility to access every possible conversion faculty stated by the relevant rules, keeping the possibility to appeal possible decisions not entirely coincident with the original application.

## Claims

1. Machine for the preparation and conservation of products with cold temperatures areas, and hot temperatures areas warmed through heat exchanger coils of the cold areas

2. Machine related to claim 1, internally divided in sections separated by division planes which are isolated compartments in relation to the space where the products are positioned and which are connected to the rear face of the machine

3. Machine related to claim 1, where the low positioned sections are kept cold at 3-10 centigrade degrees using an electric engine and heat exchangers

4. Machine related to claim 1, where the high positioned sections are kept warmed by placing the heat exchanger coils of the low sections under the high sections, inside the division planes related to claim n. 2, according to growing levels of coil quantities and temperature levels

5. Machine related to claim 1, where the materials used to build the coils and the high faces of separation panels are **characterized by** strong levels of temperature conduction

6. Machine related to claim 1, where the materials used to build the coils and the different division planes are **characterized by** different levels of temperature conduction depending on the positioning level

7. Machine related to claim 1, where each section can be divided furthermore in internal compartments adjustable in dimensions

8. Machine related to claim 1, with blocking/unblocking spheres, made of steel or other high standing material, positioned in the ground face of the machine to allow movements

9. Machine related to claim 1, with a door to extract the products

10. Machine related to claim 1, with integrated electronic control or connectible to dedicated master control modules
